(19) Europäisches Patentamt
European Patent Office
Office européen des brevets

(11) Veröffentlichungsnummer: **0 351 548 A2**

# (12) EUROPÄISCHE PATENTANMELDUNG

(21) Anmeldenummer: **89110742.7**

(51) Int. Cl.⁴: **C07F 9/46**

(22) Anmeldetag: **14.06.89**

(30) Priorität: **21.07.88 DE 3824776**

(43) Veröffentlichungstag der Anmeldung: **24.01.90 Patentblatt 90/04**

(84) Benannte Vertragsstaaten: **BE CH DE FR GB IT LI NL**

(71) Anmelder: **HOECHST AKTIENGESELLSCHAFT**
**Postfach 80 03 20**
**D-6230 Frankfurt am Main 80(DE)**

(72) Erfinder: **Neumaier, Hubert, Dr.**
**Hauptstrasse 22**
**D-5231 Stürzelbach(DE)**

## (54) Verfahren zur Herstellung von sekundären Phosphanoxiden.

(57) Zur Herstellung von sekundären Phosphanoxiden der allgemeinen Formel

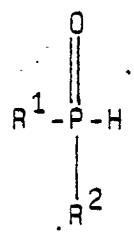

(I)

in der $R^1$ und $R^2$ gleich oder verschieden sind und einen Alkylrest mit 1 bis 18 C-Atomen, einen Cycloalkyl- oder einen Phenylrest bedeuten, setzt man einen Alkan- oder Aran-phosphonigsäuremonoester der allgemeinen Formel

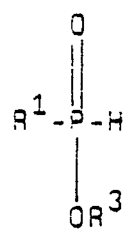

(II)

in der $R^3$ gleich oder verschieden mit $R^1$ ist und die gleiche Bedeutung wie $R^1$ und $R^2$ in Formel I hat, mit einer Grignard-Verbindung der allgemeinen Formel
$R^2MgX$ (III)
in der $R^2$ die obige Bedeutung hat und X für ein Cl- Br-oder I-Atom steht, bei Temperaturen -30 und +20 °C in Gegenwart von Tetrahydrofuran um. Dabei legt man den Phosphonigsäuremonoester (II) vor, trägt in die Vorlage pro mol dieses Esters 1,1 bis 1,5 mol der Grignard-Verbindung (III), gelöst in Tetrahydrofuran, unter Kühlung ein, hydrolysiert das Umsetzungsprodukt mit Hilfe von Phosphorsäure und trennt aus dem Hydrolysat das sekundäre Phosphanoxid ab.

EP 0 351 548 A2

# Verfahren zur Herstellung von sekundären Phosphanoxiden

Die vorliegende Erfindung betrifft ein Verfahren zu Herstellung von sekundären Phosphanoxiden der allgemeinen Formel

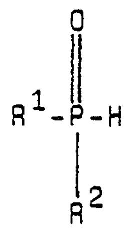

(I)

indem man einen Alkan- oder Aran-phosphonigsäuremonoester der allgemeinen Formel

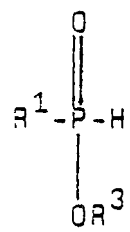

(II)

mit einer Grignard-Verbindung der allgemeinen Formel
$R^2MgX$ (III)
umsetzt.

In diesen Formeln I, II und III stellen $R^1$, $R^2$ und $R^3$ gleiche oder verschiedene Alkylreste mit 1 bis 18 C-Atomen, vorzugsweise 1 bis 6 C-Atomen, Cycloalkyl- oder Phenylreste dar, die gegebenenfalls substituiert sein können und X steht für ein Halogenatom.

Die Umsetzung der Ausgangskomponenten wird bei Temperaturen zwischen -30 und +20 °C durchgeführt. Anschließend hydrolysiert man das erhaltene Umsetzungsprodukt und trennt aus dem Hydrolysat das sekundäre Phosphanoxid ab.

Sekundäre Phosphanoxide sind wichtige technische Zwischenprodukte zur Herstellung von phosphororganischen Verbindungen, die beispielsweise als Flammschutzmittel, Pflanzenschutzmittel etc. Verwendung finden.

Entsprechend dem Reaktionsschema

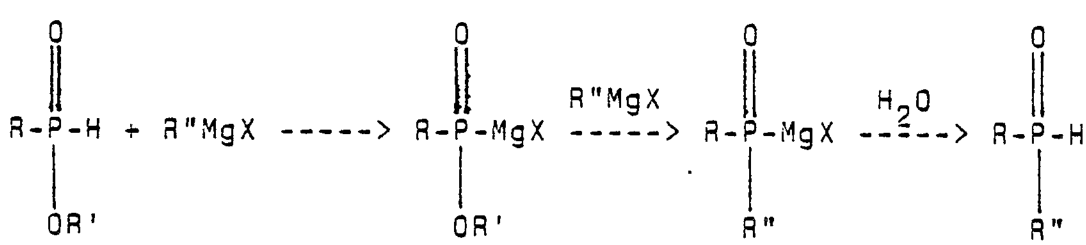


wurden nach den bisher bekannten Verfahren (S.O. Grim und L.C. Satek, J. inorg. nucl. Chem., 39, 499 [1977] und Th. L. Emmick und R.L. Letsinger, J. Am. Chem. Soc., 90, 3459 [1968]) 1 mol Phosphonigsäuremonoester mit mindestens 2 mol der Grignard-Verbindung umgesetzt, wobei der Ester in die vorgelegte Grignard-Verbindung eingetragen wurde.

Völlig überraschend wurde nun gefunden, daß entgegen dem genannten Reaktionsschema beträchtlich weniger der Grignard-Verbindung für die Umsetzung benötigt wird, wenn man in umgekehrter Weise verfährt und den Ester vorlegt.

Im einzelnen besteht die erfindungsgemäße Verbesserung des eingangs beschriebenen Verfahrens

darin, daß man den Phosphonigsäuremonoester (II) vorlegt, in die Vorlage pro mol dieses Esters 1,1 bis 1,5 mol, vorzugsweise 1,3 mol, der Grignard-Verbindung (III), gelöst in Tetrahydrofuran, unter Kühlung einträgt, das Umsetzungsprodukt mit Hilfe von Phos phorsäure hydrolisiert und aus dem Hydrolysat das sekundäre Phosphanoxid abtrennt.

Weitere Ausgestaltungen dieser Arbeitsweise bestehen darin, daß

a) der Phosphonigsäuremonoester (II) in Form einer Lösung in Tetrahydrofuran vorgelegt wird;

b) zur Hydrolyse eine Phosphorsäure mit einer Konzentration von 10 bis 30 Gew%, vorzugsweise von 18 bis 25 Gew%, verwendet wird;

c) man ein Phosphanoxid (I) mit hydrophilem Charakter aus der bei der Hydrolyse entstandenen wäßrigen Phase abtrennt, indem man diese Phase neutralisiert, dabei das Magnesium der Grignard-Verbindung (III) ausfällt, filtriert und aus dem Filtrat mit einem Lösungsmittel, beispielsweise Dichlormethan, das Phosphanoxid (I) extrahiert.

d) man die wäßrige Phase des Hydrolysates mit einer verdünnten Ammoniaklösung neutralisiert und das Magnesium in Form von $MgNH_4PO_4 \cdot H_2O$ ausfällt, welches z.B. zur Bereitung von Düngemitteln dienen kann; oder

e) man ein Phosphanoxid (I) mit hydrophobem Charakter aus der bei der Hydrolyse entstandenen organischen Phase abtrennt, indem man diese organische Phase, beispielsweise mit Hilfe von Natriumhydrogencarbonat, neutralisiert, trocknet und das organische Lösungsmittel abdestilliert.

Die Vorteile des erfindungsgemäßen Verfahrens liegen in einem deutlich geringeren Verbrauch an teurer Grignard-Verbindung und Lösemittel gegenüber dem Stand der Technik. Die Einsparung beträgt ca 35 bis 40 %. Dazu kommt ein niedrigerer Energieverbrauch bei der Rückgewinnung des teuren Lösemittels Tetrahydrofuran (THF), geringere Abwasserbelastung etc.

Die nachfolgenden Beispiele sollen zur näheren Erläuterung des Erfindungsgegenstandes dienen.

Beispiel 1

Dimethylphosphanoxid, DMPO

Zu 1569 g 95,6 %igem Methanphosphonigsäuremonoisoamylester (10 mol) wurden innerhalb von 4 Stunden bei 0 °C unter Rühren 4237 g 22,95 %ige Methylmagnesiumchloridlösung in Tetrahydrofuran (13 mol $CH_3MgCl$) zugegeben. Anschließend wurde das Reaktionsgemisch innerhalb 2 Stunden in 7214 g 18 %ige Phosphorsäure unter Kühlung eindosiert. Nach Abstellen des Rührers trennte sich das Reaktionsgemisch in zwei Phasen.

Aus der oberen, organischen Phase, die Tetrahydrofuran, i-Amylalkohol und geringe Mengen Wasser enthielt, wurde durch Destillation über eine Kolonne 85 % des in Form der Grignardlösung eingesetzten Tetrahydrofurans zurückgewonnen, während der Destillationsrückstand praktisch den gesamten in Form des Methanphosphonigsäuremonoisoamylesters eingesetzten i-Amylalkohol enthielt.

Die untere, wäßrige Phase, die das gebildete DMPO enthielt, wurde mit 1810 g 25 %iger Ammoniaklösung versetzt, wobei Magnesium als $MgNH_4PO_4 \cdot 6\ H_2O$ gefällt, mit einer Zentrifuge abgetrennt und mit Wasser gewaschen wurde. Das gesammelte Filtrat wurde in einem Umlaufverdampfer bei 45 bis 65 mbar und einer Sumpftemperatur von 45 °C auf 3460 g eingeengt. Das Konzentrat enthielt 20,3 % = 702,4 g DMPO (Ausbeute: 90 % bezogen auf den eingesetzten Methanphosphonigsäuremonoisoamylester). Bei der kontinuierlichen Gegenstromextraktion mit Dichlormethan (Volumenverhältnis DMPO-Lösung : $CH_2Cl_2$ = 1 : 28) verblieb nach Einengung des Eluats, zuletzt i.Vak., 704 g Kristallisat, das lt. NMR-Analyse 95,6 % DMPO (673 g) enthielt (Ausbeute: 86,3 % bezogen auf eingesetzten Methanphosphonigsäuremonoisoamylester. Der Rest bestand aus Trimethylphosphanoxid (1,2 %), Dimethylphosphinsäure (1,5 %), Methanphosphonigsäure (0,5 %) und Wasser (1,1 %).

Die extrahierte wäßrige Phase enthielt noch 29,8 g DMPO, neben 40 g Methanphosphonigsäure und 2,4 g Dimethylphosphinsäure.

Beispiel 2

Es wurde wie in Beispiel 1 verfahren, jedoch wurden 1508 g 99,5 %iger Methanphosphonigsäuremonoisoamylester (10 mol) mit nur 12 mol $CH_3MgCl$ (3890 g 23,1 %ige Lösung in THF) umgesetzt. Bei der Aufarbeitung der wäßrigen Phase enthielt das Konzentrat des Filtrats nach der Magnesiumfällung 642,8 g

DMPO (Ausbeute: 82,4 %). Aus dem Eluat der Extraktion wurden 631 g Kristallisat gewonnen, das 96 %, d.s 605,8 g = 7,77 mol DMPO enthielt (Ausbeute: 77,7 %).

Beispiel 3

Ethylmethylphosphanoxid, EMPO

Zu 135 g Ethanphosphonigsäuremonobutylester (= 0,9 mol) in 300 $cm^3$ Tetrahydrofuran wurden 405,8 g 23,1 %ige Methylmagnesiumchloridlösung in Tetrahydrofuran (1,26 mol $CH_3MgCl$) bei -10 °C in 75 min zugetropft. Nach Erwärmen auf Raumtemperatur wurde die Rektionslösung in 534 g 25 %ige Phosphorsäure eingetropft, wobei sich zwei Phasen bildeten. Die untere, wäßrige Phase wurde mit 216 g 25 %iger Ammoniaklösung neutralisiert, wobei $MgNH_4PO_4 \cdot 6\ H_2O$ ausfiel. Das Salz wurde abfiltriert und mit Wasser gewaschen. Das Filtrat wurde anschließend auf 500 $cm^3$ eingeengt und dann in einem Perforator 50 Stunden mit Dichlormethan extrahiert. Aus dem Eluat wurde zunächst Dichlormethan abgetrieben und anschließend der Rückstand i.Vak. destilliert (Kp bei 1,9 mbar: 62 bis 63 °C). Es wurden 64,6 g Destillat erhalten, das lt. $^{31}P$-NMR 99 % EMPO enthielt (Ausbeute: 77,3 %).

Beispiel 4

Diphenylphosphanoxid, DPPO

Zu 198 g Benzolphosphonigsäuremonobutylester in 300 $cm^3$ Tetrahydrofuran wurden innerhalb von 2 Stunden bei -10 bis 0 °C 740 g 29,95 %ige Phenylmagnesiumchloridlösung in Tetrahydrofuran (1,4 mol $C_6H_5MgCl$) zugetropft. Anschließend wurde das Reaktionsgemisch unter Kühlung in 588 g 25 %ige Phosphorsäure eingetropft. Es bildeten sich zwei Phasen. Die organische Phase wurde mit Natriumhydrogencarbonat neutralisiert (pH = 7) und anschließend über wasserfreiem Natriumsulfat getrocknet. Nach Filtration wrude aus der Lösung Tetrahydrofuran, zuletzt i.Vak abgetrieben. Es verblieben 173 g Rückstand, der nach dem Erkalten kristallisierte. Eine $^{31}P$-NMR-Analyse ergab einen Gehalt von 92 % DPPO (Ausbeute: 78,8 %). Durch Destillation i. Vak. (Kp bei 1,33 mbar: 160 °C) kann das Produkt weiter gereinigt werden (Fp. : 52 bis 54 °C).

**Ansprüche**

1. Verfahren zur Herstellung von sekundären Phosphanoxiden der allgemeinen Formel

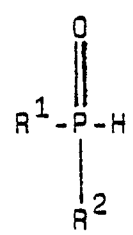

(I)

in der $R^1$ und $R^2$ gleich oder verschieden sind und einen Alkylrest mit 1 bis 18 C-Atomen, einen Cycloalkyl- oder einen Phenylrest bedeuten, der gegebenenfalls substituiert sein kann, indem man einen Alkan- oder Aran-phosphonigsäuremonoester der allgemeinen Formel

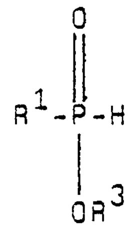

(II)

in der $R^3$ gleich oder verschieden mit $R^1$ ist und die gleiche Bedeutung wie $R^1$ und $R^2$ in Formel I hat, mit einer Grignard-Verbindung der allgemeinen Formel

$R^2MgX$ (III)

in der $R^2$ die obige Bedeutung hat und X für ein Cl-, Br-oder I-Atom steht, bei Temperaturen zwischen -30 und +20 °C in Gegenwart von Tetrahydrofuran umsetzt, das Umsetzungsprodukt hydrolisiert und aus dem Hydrolysat das gebildete sekundäre Phosphanoxid abtrennt, dadurch gekennzeichnet, daß man den Phosphonigsäuremonoester (II) vorlegt, in die Vorlage pro mol dieses Esters 1,1 bis 1,5 mol der Grignard-Verbindung (III), gelöst in Tetrahydrofuran, unter Kühlung einträgt, das Umsetzungsprodukt mit Hilfe von Phosphorsäure hydrolisiert und aus dem Hydrolysat das sekundäre Phosphanoxid abtrennt.

2. Verfahren nach Anspruch 1, dadurch gekennzeichnet, daß der Phosphonigsäuremonoester (II) in Form einer Lösung in Tetrahydrofuran vorgelegt wird.

3. Verfahren nach Anspruch 1 oder 2, dadurch gekennzeichnet, daß pro mol des Esters (II) 1,3 mol der Grignard-Verbindung (III) eingesetzt wird.

4. Verfahren nach mindestens einem der Ansprüche 1 bis 3, dadurch gekennzeichnet, daß zur Hydrolyse eine Phosphorsäure mit einer Konzentration von 10 bis 30 Gew% verwendet wird

5. Verfahren nach Anspruch 4, dadurch gekennzeichnet, daß eine Phosphorsäure mit einer Konzentration von 18 bis 25 Gew% verwendet wird

6. Verfahren nach mindestens einem dar Ansprüche 1 bis 5, dadurch gekennzeichnet, daß man ein Phosphanoxid (I) mit hydrophilem Charakter aus der bei der Hydrolyse entstandenen wäßrigen Phase abtrennt, indem man diese Phase neutralisiert, dabei das Magnesium der Grignard-Verbindung (III) ausfällt, filtriert und aus den Filtrat mit einem Lösungsmittel das Phosphanoxid (I) extrahiert.

7. Verfahren nach Anspruch 6, dadurch gekennzeichnet, daß man als Lösungsmittel Dichlormethan verwendet.

8. Verfahren nach Anspruch 6, dadurch gekennzeichnet, daß man die wäßrige Phase des Hydrolysates mit einer verdünnten Ammoniaklösung neutralisiert und das Magnesium in Form von $MgNH_4PO_4 \cdot H_2O$ ausfällt.

9. Verfahren nach mindestens einem der Ansprüche 1 bis 5, dadurch gekennzeichnet, daß man ein Phosphanoxid (I) mit hydrophobem Charakter aus der bei der Hydrolyse entstandenen organischen Phase abtrennt, indem man diese organische Phase neutralisiert, trocknet und das organische Lösungsmittel abdestilliert.

10. Verfahren nach Anspruch 9, dadurch gekennzeichnet, daß man die organische Phase mit Hilfe von Natriumhydrogencarbonat neutralisiert.